# EUROPEAN PATENT APPLICATION

(11) **EP 1 473 878 A2**
(43) Date of publication of application: **03.11.2004**
(21) Application number: 04007654.9
(22) Date of filing: 30.03.2004
(51) Int. Cl.: H04L 12/28

(54) **Wireless communication apparatus and wireless communication control method**

(30) Priority: 28.04.2003 JP 2003124117
(71) Applicant: Kabushiki Kaisha Toshiba, Tokyo (JP)
(72) Inventor: Kobayashi, Takero, 1-1-1 Shibaura Minato-ku Tokyo 105-8001 (JP)
(74) Representative: Henkel, Feiler & Hänzel

(57) **Abstract**

A wireless communication apparatus has a wireless communication device which is capable of using a plurality of communication link levels with different communication rates, a storing device (108) for storing level management data corresponding to at least one of an outside communication device and a packet type used for wireless communication, and a controlling device (107) for controlling a communication link level to be used by the wireless communication device on the basis of the level management data.

## Description

Embodiments of the invention relate to a wireless communication device and a wireless communication control method.

In recent years, wireless LAN communications based on the Institute of Electronics and Electrical Engineers (IEEE) 802.11x standards (e.g., IEEE 802.11, 802.11a, 802.11b & 802.11g) feature a mechanism for dynamically changing a communication rate according to a communication status. For instance, according to the IEEE 802.11b standard, a communication rate having four stages of 1 Mbps, 2 Mbps, 5.5 Mbps, and 11 Mbps is defined and is controlled so as to transmit a communication packet at an appropriate communication rate according to a communication status between wireless stations for making wireless communication.

For example, Japanese Patent Application Publication (KOKAI) No. 2001-217896 discloses a wireless communication system that can adjust the communication rate from one to another in accordance with bit error rate parameter during actual data communication. More specifically, this system deploys a mechanism that statistically manages a communication status of an actual communication packet in order to set an appropriate communication rate. However, this may cause an unwanted transition between two different communication rates.

To illustrate this problem, suppose a wireless LAN access point, based on the IEEE 802.11b standard can communicate at 5.5 Mbps or less without any difficulty, but cannot communicate with any wireless station at 11 Mbps.

In this case, when the wireless LAN access point communicates with the wireless station at 5.5 Mbps, a loss of the wireless packet does not occur at all. The link speed is changed to a one-stage higher communication rate of 11 Mbps after a while. However, since the communications repeatedly fail at 11 Mbps, an operation for returning to 5.5 Mbps commences.

In order to avoid unwanted transitions between communication rates, a system may be adapted with a more gradual transition of the communication rate. In many cases, it is considered that a similar condition is used in both cases of raising and lowering the communication rate. For example, the communication rate is raised/lowered when the packet communication is successfully performed/fails ten times in succession.

However, even "gradual" communication rate transitions do not properly account for packet loss during such transitions. For instance, when communication of real-time based stream data such as video data is transferred by a system which does not have a mechanism of detecting a packet loss such as UDP (User Datagram Protocol) or the like, such packet loss is directly led to a loss of the communication data. Therefore, in such a case, it should be possibly prevented that the packet loss occurs due to the raising of the communication rate.

The present invention has been made in view of the above circumstances, and it is an object to provide a wireless communication apparatus capable of separately controlling a transition between a plurality of communication link levels for each wireless communication party or each communication packet type, and a wireless communication control method therefor.

In order to achieve the above object, a wireless communication apparatus according to the present invention, which has a database to store a link level and a control parameter associated with the first WLAN station, and a driver in communication with the database, the driver adjusting the link level if a value of the control parameter exceeds a predetermined maximum value and the link level is currently set at a level below a maximum link level.

In the above invention, it is achieved that changeover of a communication rate having four stages of 1 Mbps, 2 Mbps, 5.5 Mbps, and 11 Mbps is separately controlled for each wireless communication party or each communication packet type.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an exemplary diagram showing a relationship between a wireless LAN link level and a distance according to a first embodiment of the present invention;
FIG. 2 is an exemplary block diagram showing a hardware configuration of a wireless LAN access point in the first embodiment;
FIG. 3 is an exemplary diagram showing a software configuration of the wireless LAN access point in the first embodiment;
FIG. 4 is an exemplary flow chart showing an operation of link level control performed by the wireless LAN access point in the first embodiment;
FIG. 5 is a table exemplifying initial value of control parameter corresponding to a WLAN-STA in the first embodiment;
FIGS. 6A and 6B are exemplary diagram showing a transition of a link level when a stable link level is intermediate, and a transition of a link level when a stable link level is maximum in the first embodiment;
FIG. 7 is an exemplary diagram exemplifying a recording GUI for specific control provided by a Web setting unit of the wireless LAN access point according to a second embodiment of the present invention;
FIG. 8 is an exemplary flow chart showing an operation of link level control with a plurality of changing threshold, performed by a wireless LAN access point in the second embodiment; and
FIG. 9 is a table exemplifying a plurality of changing threshold used by the wireless LAN access point in the second embodiment.

Embodiments of the present invention will be described hereinafter with reference to the accompanying drawings. In general, according to one embodiment of the invention, a "wireless communication apparatus" comprises a wireless communication device that is capable of adjusting communication rates to a plurality of communication link levels. The wireless communication device may be adapted as a computer (e.g., portable, desktop, server, etc.), personal digital assistant, cellular phone, a wireless LAN access point, or the like. The wireless communication apparatus further comprises a storing device for storing level management data corresponding to at least one of another (outside) communication device and a packet type used for wireless communication, and a controlling device for controlling a communication link level to be used by the wireless communication device on the basis of the level management data.

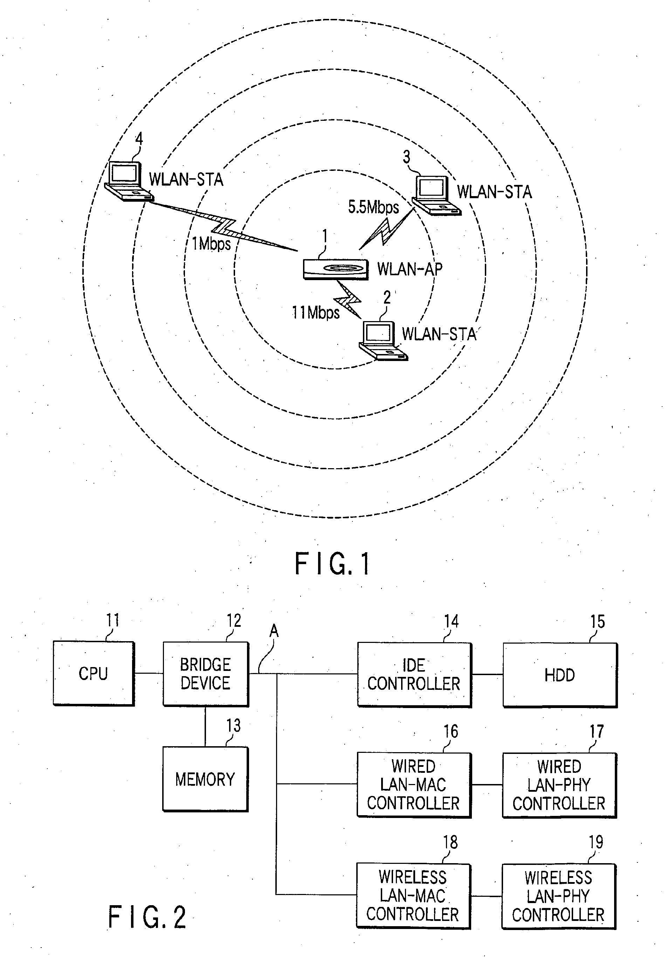

According to a first embodiment, FIG. 1 shows a correlation between a wireless LAN link level and a distance separating a wireless LAN access point (WLAN-AP) and a wireless LAN station (WLAN-STA). Herein, the WLAN-AP 1 is an electronic apparatus for distributing, for example, video data and the like through wireless communications in response to requests from the WLAN-STAs 2-4. Both the WLAN-AP 1 and the WLAN-STAs 2-4 are wireless communication devices that perform wireless communication based on the IEEE 802.11b standard.

As shown in FIG. 1, the WLAN-AP 1 and the WLAN-STA 2 are positioned in close proximity to each other and are connected at the link level of 11 Mbps. The WLAN-AP 1 and the WLAN-STA 3, which are in a slightly more distant positional relationship, are connected at the link level of 5.5 Mbps. The WLAN-AP 1 and the WLAN-STA WLAN-STA3, which are in a further distant positional relationship, are connected at the link level of 1 Mbps. In the other words, the used link level is raised/lowered in proportion to the length of the distance between the both not considered.

Conventionally, the raising/lowering of this link level was controlled by the respective WLAN-STA. Such control was performed in a uniform manner based solely on the distal proximity between the WLAN-AP 1 and the selected WLAN-STA 2, 3 or 4.

For example, when the WLAN-STA 4 moves to the position of the WLAN-STA 3, the link level thereof is changed from 1 Mbps to 5.5 Mbps, and when it moves to the position of the WLAN-STA 2, the link level thereof is changed to 11 Mbps. Even if packet loss was allowed in the WLAN-STA 2 to some degree, and on the contrary a packet loss were not allowed in the WLAN-STA 4, this link level adjustment was performed without considering such loss fact. Further, even if a plurality of types of communication packets exchanged between the both are present depending on whether or not the loss is allowable to some degree, this fact is not considered.

However, in this embodiment, the changeover condition of this link level is appropriately used for each wireless communication device or each communication packet type.

FIG. 2 shows an exemplary hardware configuration of the WLAN-AP 1. Herein, the WLAN-AP 1 comprises a CPU 11, a bridge device 12 coupled to the CPU 11, and a memory 13 coupled to the bridge device 12. The WLAN-AP 1 also includes an IDE controller 14, an hard disk drive (HDD) 15 coupled to the IDE controller 14, a wired LAN-MAC controller 16, a wired LAN-PHY controller 17 coupled to the wired LAN-MAC controller 16, a wireless LAN-MAC controller 18, and a wireless LAN-PHY controller 19 coupled to the wireless LAN-MAC controller 18.

The bridge device 12 is coupled to each IDE controller 14, the wired LAN-MAC controller 16, and the wireless LAN-MAC controller 18. Further, this WLAN-AP 1 is provided with a bus (e.g., Peripheral Component Interconnect "PCI" bus) A for connecting to other devices (e.g., PCI devices such as the IDE controller 14, the wired LAN-MAC controller 16, the wireless LAN-MAC controller 18, and the bridge device 12).

The CPU 11 controls the WLAN-AP 1 according to software loaded on the memory 13. The bridge device 12 controls data transfer between the CPU 11 and the memory 13, or the communications between the CPU 11 and the IDE controller 14, the wired LAN-MAC controller 16, and the wireless LAN-MAC controller 18. The CPU 11 may be deployed as a microprocessor, a digital signal processor, application specific integrated circuit, microcontroller or the like.

The memory 13 stores a program to be executed by the CPU 11 therein, or is utilized as a temporary storage position of data required for the control of the system. The IDE controller 14 drives and controls the HDD 15. The HDD 15 stores a program for operating the WLAN-AP 1 or video data therein.

The wired LAN-MAC controller 16 performs communication control of the wired LAN in association with the wired LAN-PHY controller 17. On the other hand, the wireless LAN-MAC controller 18 performs communication control of the wireless LAN in association with the wireless LAN-PHY controller 19.

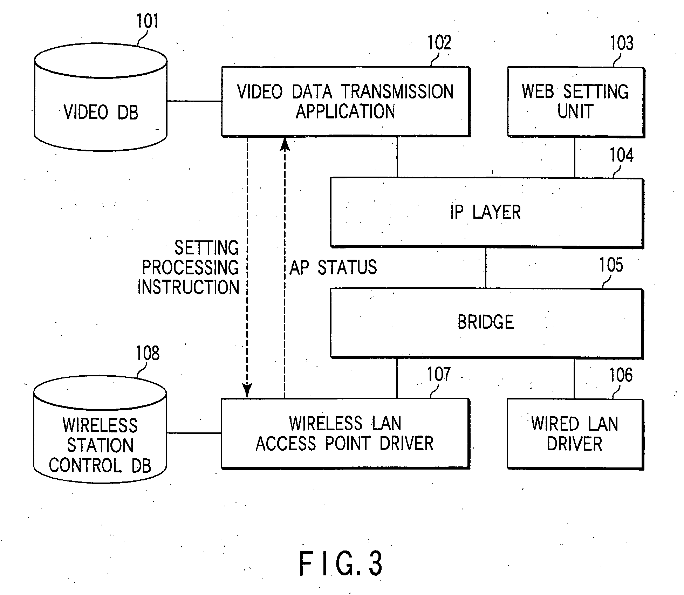

FIG. 3 shows an exemplary software configuration of the WLAN-AP 1. The WLAN-AP1 stores software within the memory 13 for execution or access by the CPU 11. The software comprises a video database (DB) 101, a video transmission application 102, a Web setting unit 103, an IP layer 104, a bridge 105, a wired LAN driver 106, a wireless LAN access point driver 107, and a wireless station control DB 108.

The video DB 101 stores video data sent by the video data transmission application 102 through the IP communication therein. The video data transmission application 102 utilizes Realtime Transfer Protocol (hereinafter "RTP") or the like to send the video data stored in the video DB 101 to a wireless communication device through the IP layer 104, bridge 105 and wireless LAN access point 107. Further, the video data transmission application 102 communicates with the wireless LAN access point driver 107 in order to adjust the packet link level control system in the RTP communication.

The Web setting unit 103 provides a setting function of, for example, in the form of homepage of causing a user to perform the setting of the present system. The IP layer 104 provides an IP communication function for the video data transmission application 102 or the Web setting unit 103.

The bridge 105 controls transfer of MAC level packet between the IP layer 104 and the wired LAN driver 106, the wireless LAN access point driver 107. The wired LAN driver 106 is connected to the bridge 105 to control the communication packet of the wired LAN.

The wireless LAN access point driver 107 provides a wireless LAN access point function, and performs control of the link level of the wireless LAN by utilizing information in the wireless station control DB 108. Further, the wireless LAN access point driver 107 provides a notice to the video data transmission application 102 of a control status of the wireless LAN as needed. The wireless station control DB 108 stores information for controlling the link level for each WLAN-STA connected to the wireless LAN access point function in the present system therein.

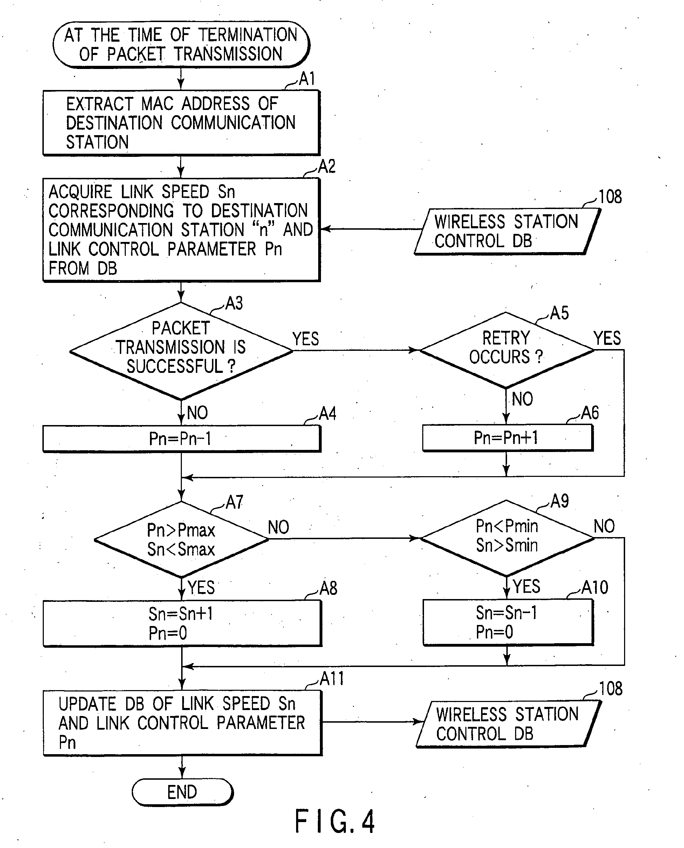

Next, an operation of the link level control performed by the WLAN-AP 1 having the hardware configuration and the software configuration described above will be described with reference to FIG. 4. FIG. 4 shows the operation of the link level control performed by the WLAN-AP 1.

When a packet transmission processing is terminated, the wireless LAN access point driver'107 acquires a destination MAC address included in the packet (block A1). Also, the wireless LAN access point driver 107 acquires a link level Sn associated with a WLAN-STA "n" corresponding to this acquired destination MAC address, and a control parameter Pn from the wireless station control DB 108 (block A2). The link level "Sn" is a code that represents the supported transmission rates (e.g., Sn = 4 to represent 1, 2, 5.5 & 11 Mbps respectively).

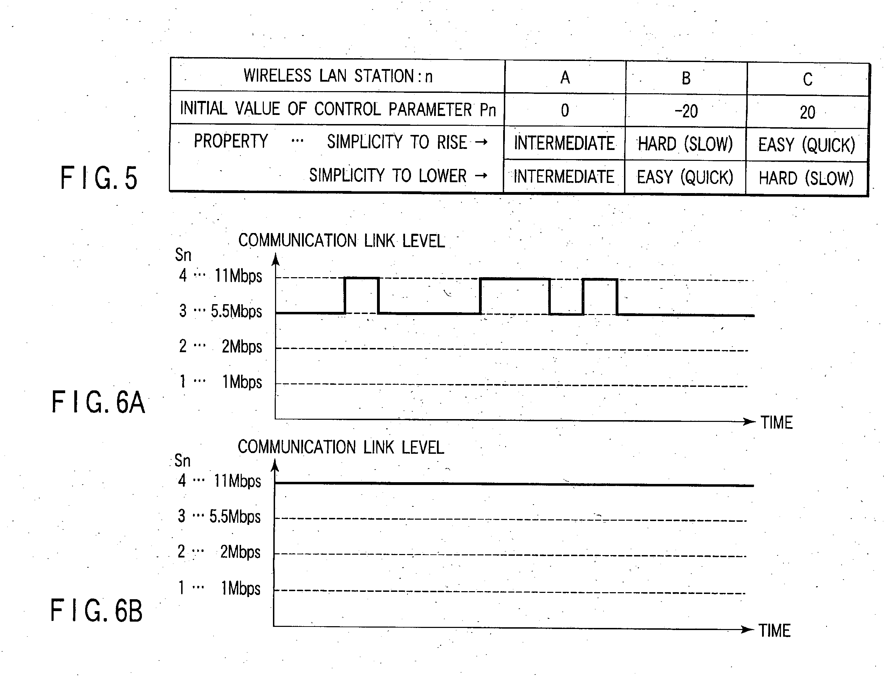

FIG. 5 shows an example of control parameters (Pns) corresponding individual WLAN-STA A, B, and C. Pn of WLAN-STA A is 0, which means that the simplicity of both to raise a link level and to lower a link level are substantially equal to each other. Pn of WLAN-STA B is -20, which means that it is easier and quicker to lower the link level than it is to raise the link level. In contrast, Pn of WLAN-STA C is 20, which means that it is easier and quicker to raise the link level than it is to lower a link level.

After block A2, the wireless LAN access point driver 107 checks a transmission status of the packet in the terminated packet transmission processing, and determines whether or not the packet transmission has been successfully performed (block A3). When the packet transmission has failed (NO in block A3), the wireless LAN access point driver 107 decrements a value of the control parameter Pn of the WLAN-STA "n" by one (block A4). For example, if it is the WLAN-STA B and the control parameter is -20 just before block A4, the parameter is decremented to -21.

On the other hand, when the packet transmission has been successfully performed (YES in block A3), the wireless LAN access point driver 107 further determines whether or not a retry processing has occurred in the transmission control of the MAC level of the wireless LAN at the time of actual transmission (block A5). When the retry has not occurred (NO in block A5), the wireless LAN access point driver 107 increments the value of the control parameter Pn of the WLAN-STA "n" by one (block A6). For example, if it is the WLAN-STA B and the control parameter is -20 just before the block A5, the parameter is incremented to -19.

In short, when the packet transmission has been successfully performed without the occurrence of the retry, the value of the control parameter Pn of the WLAN-STA "n" is incremented by one; when the packet transmission has been successfully performed in spite of the occurrence of the retry, the value of the control parameter Pn is maintained as it is'; and when the packet transmission has failed, the value of the control parameter Pn is decremented by one.

Thereafter, the wireless LAN access point driver 107 determines whether or not the value of the control parameter Pn of the WLAN-STA "n" exceeds Pmax, which is 40 in this embodiment, and whether or not a value of a current link speed Sn of the WLAN-STA "n" is smaller than a maximum value Smax (e.g., Smax = 4) of the link level (block A7). When the conditions in this condition determination processing are satisfied (YES in block A7), the wireless LAN access point driver 107 increments the level of the link level Sn corresponding to the WLAN-STA "n" by one, and initializes the control parameter Pn to 0 (block A8). In the block A8, instead of initializing the control parameter Pn to 0, it may be set to initial parameter value corresponding each WLAN-STA "n" shown in FIG. 5, e.g. to -20 if it is the WLAN-STA B.

On the other hand, when the conditions are not satisfied (NO in block A7), the wireless LAN access point driver 107 now determines whether or not the value of the control parameter Pn of the WLAN-STA "n" is smaller than Pmin which is -40 in this embodiment, and whether or not the value of the current link level of the WLAN-STA "n" is larger than a minimum value Smin of the link level which is 1 (block A9). When the conditions in this condition determination processing are satisfied (YES in block A9), the wireless LAN access point driver 107 decrements the level of the link level Sn corresponding to the WLAN-STA "n" by one, and initializes the control parameter Pn to 0 (block A10). In the block A10, instead of initializing the control parameter Pn to 0, it may be set to initial parameter value corresponding each WLAN-STA "n" shown in FIG. 5, e.g. to -20 if it is the WLAN-STA B.

The wireless LAN access point driver 107 updates the values Pn and Sn in the wireless station control DB 108 in order to maintain the values Pn and Sn after this update (block A11).

As described above, the WLAN-AP 1 of FIG. 1 performs the management of the link level and the control of the transition thereof for each outside wireless device. FIGS. 6A and 6B are exemplary diagram showing transitions of the link level, where (A) shows a transition of the link level when a stable link level is an intermediate link level, and on the contrary (B) shows a transition of the link level when the stable link level is a maximum link level.

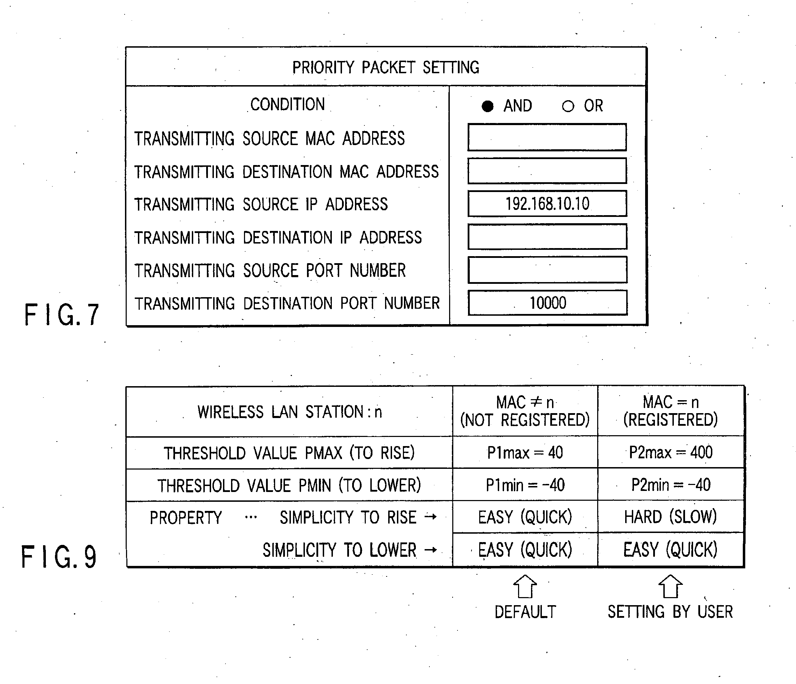

Next, a second embodiment where a wireless LAN access point (e.g., WLAN-AP 1) stores a plurality of link level changeover conditions, i.e. a plurality of threshold values P1max/P1min and P2max/P2min, will be described with FIGS. 7 through 9. FIG. 7 is a diagram exemplifying a recording GUI (Graphical User Interface) for specific control provided by the Web setting unit 103.

In this screen, "transmitting source MAC address", "transmitting destination MAC address", "transmitting source IP address", "transmitting destination IP address", "transmitting source port number", and "transmitting destination port number" can be set as the conditions for identifying a packet for the specific control, and further, (AND) where all the conditions coincide/(OR) where either one coincides can be set. The contents of the setting performed via this screen are registered in the wireless station control DB 108.

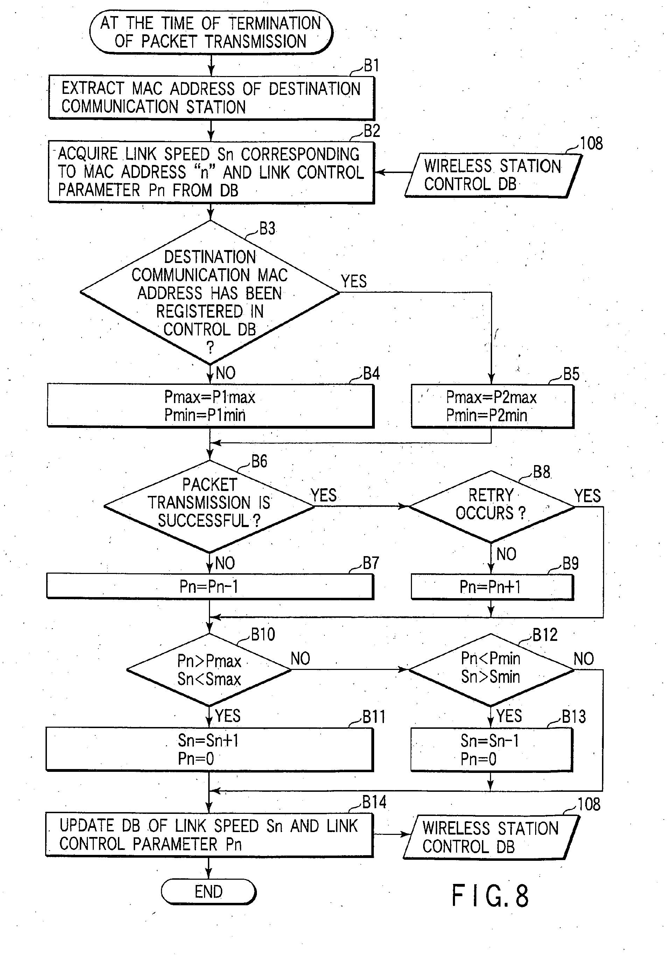

FIG. 8 shows an exemplary operation of the link level control performed by a wireless LAN access point (e.g., WLAN-AP 1 of FIG. 1) in the case that the conditions for identifying a packet is set by using the GUI shown in FIG. 7.

When the packet transmission processing is terminated, the wireless LAN access point driver 107 acquires a destination MAC address of the packet (block B1). Further, the wireless LAN access point driver 107 acquires a link level Sn associated with a WLAN-STA "n" corresponding to this acquired destination MAC address, and a control parameter Pn from the wireless station control DB 108 (block B2).

Further, the wireless LAN access point driver 107 determines whether or not the MAC address is registered in the wireless station control DB 108 as a MAC address of the WLAN-STA targeted for the specific control (block B3). When the destination MAC address is not registered (NO in block B3), threshold values P1max and P1min for general processing are stored in the threshold values Pmax and Pmin of the control parameters (block B4). On the other hand when the destination MAC address is registered (YES in block B3), the threshold values P2max and P2min for the specific control are stored in the threshold values Pmax and Pmin of the control parameters (block B5).

FIG. 9 shows one example of P1max, P1min, P2max, and P2min. In the case that the destination MAC address is not registered, Pmax=P1max=40, Pmin=P1min=-40. On the other hand, in the case that the destination MAC address is registered, Pmax=P2max=400, Pmin=P2min=-40. Therefore, in the case that the destination MAC address is registered, it is harder to raise a link level than in the case that the destination MAC address is not registered.

Turning to FIG. 8, after blocks B4 and B5, the wireless LAN access point driver 107 checks a transmission status of the packet in the terminated packet transmission processing, and determines whether or not the packet transmission has been successfully performed (block B6). When the packet transmission has failed (NO in block B6), the wireless LAN access point driver 107 decrements the value of the control parameter Pn of the WLAN-STA "n" by one (block B7).

On the other hand, when the packet transmission has been successfully performed (YES in block B6), the wireless LAN access point driver 107 further determines whether or not a retry processing has occurred in the transmission control of the MAC level of the wireless LAN at the time of actual transmission (block B8). When the retry has not occurred (NO in block B8), the wireless LAN access point driver 107 increments the value of the control parameter Pn of the WLAN-STA "n" by one (block B9).

Thereafter, the wireless LAN access point driver 107 determines whether or not the value of the control parameter Pn of the WLAN-STA "n" exceeds Pmax, and whether or not the value of the current link speed Sn of the WLAN-STA "n" is smaller than a maximum value Smax of the link level, which is set to 4 in this embodiment (block B10). When these conditions are satisfied (YES in block B10), the wireless LAN access point driver 107 increments the level of the link level Sn corresponding to the WLAN-STA "n" by one and initializes the control parameter Pn to 0 (block B11).

On the other hand, when the conditions are not satisfied (NO in block B10), the wireless LAN access point driver 107 now determines whether or not the value of the control parameter Pn of the WLAN-STA "n" is smaller than Pmin, and whether or not the value of the current link level of the WLAN-STA "n" is larger than a minimum value Smin of the link level (block B12). When the conditions in this condition determination processing are satisfied (YES in block B12), the wireless LAN access point driver 107 decrements the level of the link level Sn corresponding to the WLAN-STA "n" by one, and initializes the control parameter Pn to 0 (block B13).

The wireless LAN access point driver 107 updates the values Pn and Sn in the wireless station control DB 108 in order to maintain the values Pn and Sn after this update (block B14).

As described above, the wireless LAN access point (e.g., WLAN-AP 1 of FIG. 1) manages the link level and controls of the transition thereof for each party or device, and additionally a plurality of link level changeover conditions are held and are appropriately utilized for each party or device. The setting of the link level changeover conditions may be performed by the GUI provided by the Web setting unit 103, and may be performed by the Web setting unit 103 in response to instructions from the WLAN-STAs 2-4. Alternatively, the wireless LAN access point driver 107 may automatically perform the setting according to the transmission status of the communication packet at any given time.

The present invention is not restricted to the above-mentioned embodiment, and may modify and implement structure requirements in the implementation stage in a range, which does not depart from the spirit thereof.

The initial value a control parameter Pn, Pmax, and Pmin may be changed to another value if it is appropriate under the concept of this invention. Also, the Sn showing current link speed, and the Smax/Smin showing maximum/minimum link speed value of WLAN-STA may be changed depending to the wireless communication standard used therewith.

Further, in the above embodiment, there is described the example where the management of the link level or the control of the transition thereof is performed or the changeover conditions are appropriately utilized for each wireless communication device/party, which may be performed for each communication packet type instead. There is configured such that a plurality of transmission queues are held and a communication packet for a specific communication party/device or a specific type of communication packet is distributed to either transmission queue so that the management of the link level or the control of the transition thereof, or the appropriate utilization of the changeover conditions may be performed for the plurality of transmission queues. In this case, the above function relating to the link level may be utilized as a function complementary to QoS.

Further, in the case where PCF (Point Coordination Function) and DCF (Distributed Coordination Function), that is, CFP (Contention Free Period) and CP (Contention Period) in the wireless LAN are controllable, when a communication packet of the transmission queue to which a communication packet for a specific communication party or a specific type of communication packet is distributed is configured to be transmitted only in the CFP, and the changeover conditions are set such that the link level of the transmission queue can transit in a surely communicable range, the control functions of the CFP and the CP can be utilized as the functions complementary to the QoS.

All of aforementioned embodiments are applicable to an apparatus and/or device in the field of wireless communication, i.e.,a personal computer, a personal digital assistance, an audio/visual device, and so on.

## Claims

1. A wireless local area network (WLAN) access point adapted for communication with a plurality of WLAN stations including a first WLAN station, **characterized by** comprising:
a database (108) to store a link level and a control parameter associated with the first WLAN station; and
a driver (107) in communication with the database, the driver adjusting the link level if a value of the control parameter exceeds a predetermined maximum value and the link level is currently set at a level below a maximum link level.

2. The WLAN access point according to claim 1, **characterized in that** the link level is a code that represents a supported transmission rate with the first WLAN station.

3. The WLAN access point according to claim 2, **characterized in that** the control parameter is an adjusted value to specify a time period for adjusting the link level.

4. The WLAN access point according to claim 3, **characterized in that** the driver further adjusts the link level if the value of the control parameter is less than a predetermined minimum value and the link level is currently set at a level above a minimum link level.

5. The WLAN access point according to claim 4, **characterized in that** the minimum link level is a value to specify a transmission rate of one million bits per second and the maximum link level is a value to specify a transmission rate of at least eleven million bits per second.

6. The WLAN access point according to claim 4, **characterized in that** the driver controls the link level by acquiring a destination media access control (MAC) address from an incoming packet sent by the first WLAN station and obtaining the link level associated with the first WLAN station from the database.

7. The WLAN access point according to claim 6, **characterized in that** the driver determines whether the destination MAC address is registered in the database and selects (i) a first predetermined maximum value and a first predetermined minimum value if the destination MAC address is registered or (ii) a second predetermined maximum value and a second predetermined minimum value if the destination MAC address is not registered.

8. The WLAN access point according to claim 7, **characterized in that** the first predetermined maximum value is greater than the second predetermined maximum value.

9. The WLAN access point according to claim 7, **characterized in that** the first predetermined maximum value is at least two times greater than the second predetermined maximum value.

10. The WLAN access point according to claim 4, **characterized in that** the driver adjusts the link level when the value of the control parameter is less than the predetermined minimum value by decrementing the link level by one.

11. The WLAN access point according to claim 1, **characterized in that** the driver resets the control parameter to a predetermined value and stores the adjusted link level and the reset control parameter within the database.

12. The WLAN access point according to claim 1, **characterized in that** the driver adjusts the link level by incrementing the link level by one.

13. A method for adjusting a link level to alter a transmission rate between a wireless local area network (WLAN) access point and a WLAN station, **characterized by** comprising the steps of:
storing a link level and a control parameter associated with the WLAN station; and
adjusting (A7, A9) the link level if a value of the control parameter exceeds a predetermined maximum value and the link level is currently set at a level below a maximum link level.

14. The method according to claim 13, **characterized in that** the control parameter is a dynamically adjusted value to specify when the link level is to be adjusted.

15. The method according to claim 13, **characterized by** further comprising the steps of:
adjusting (A9, A10) the link level if the value of the control parameter is less than a predetermined minimum value and the link level is currently set at a level above a minimum link level.

16. The method according to claim 15, **characterized by** further comprising the steps of:
resetting (All) the control parameter to a predetermined value; and
storing the adjusted link level and the reset control parameter as updated values for the link level and the control parameter.

17. The method according to claim 13, **characterized in that** the adjusting of the link level'comprises (i) acquiring a destination media access control (MAC) address from an incoming packet sent by the WLAN station and (ii) obtaining the link level associated with the WLAN station from a database.

18. The method according to claim 17, the prior to adjusting the link level, the method **characterized by** further comprising:
determining (B3, B4, B5) whether the destination MAC address is registered in the database and to select (i) a first predetermined maximum value and a first predetermined minimum value if the destination MAC address is registered or (ii) a second predetermined maximum value and a second predetermined minimum value if the destination MAC address is not registered, the first predetermined maximum value being greater than the second predetermined maximum value.
